# EUROPEAN PATENT APPLICATION

(11) **EP 4 571 144 A1**
(43) Date of publication of application: **18.06.2025**
(21) Application number: 23216600.9
(22) Date of filing: 14.12.2023
(51) Int. Cl.: F16H 25/06, F03D 15/00

(54) **TRANSMISSION FOR A WIND TURBINE**

(71) Applicant: VESTAS WIND SYSTEMS A/S, 8200 Aarhus N (DK)
(72) Inventor: SCHRÖDER, Tim Niklas, Dortmund (DE); BAGER, Christian, Herne (DE); PIEL, Daniel, Holzwickede (DE); SCHREIBER, Heiko, Doberschau (DE)
(74) Representative: Vestas Patents Department

(57) **Abstract**

A transmission of a 'radially moving teeth' type, comprising a fixed gear ring, a first drive member rotationally supported within the fixed gear ring, the first drive member defining a plurality of radially arranged apertures each of which accommodates a tooth element, and a second drive member which is rotationally supported within the first drive member. The tooth element engage with respective pivot pads. One or more of the plurality of pivot pads comprises: a pivot pad body configured to have a pivot portion shaped for engagement with an associated one of the radially-movable tooth elements of the transmission, the pivot portion extending along a pivot axis, wherein the pivot pad body further comprises an integral retainer formation configured to constrain movement of the associated radially-movable tooth element with respect to the pivot portion in the direction of the pivot axis. Advantageously, the retainer formation guards against movement of the pivot pad in a sideways direction with respect to the corresponding tooth element and achieves this in an elegant way by integrating the retainer formation into the pivot pad.

## Description

### Technical Field

The present invention relates to a transmission in a powertrain assembly, particularly for a wind turbine.

### Background to the Invention

Wind turbines convert kinetic energy from the wind into electrical energy, using a large rotor with a number of rotor blades. A typical Horizontal Axis Wind Turbine (HAWT) comprises a tower, a nacelle on top of the tower, a rotor hub mounted to the nacelle and a plurality of wind turbine rotor blades coupled to the rotor hub. Depending on the direction of the wind, the nacelle and rotor blades are turned and directed into an optimal direction by a yaw system for rotating the nacelle and a pitch system for rotating the blades.

The nacelle houses many functional components of the wind turbine, including for example a main rotor shaft and one or more electrical generator, as well as convertor equipment for converting the mechanical energy at the rotor into electrical energy for provision to the grid. In some types of wind turbines, known as 'direct drive' systems, the main rotor shaft drives the electrical generator directly. However, it is more common for wind turbines to include a gearbox to step up the rotational speed between the main rotor shaft and the electrical generator, thus converting the low speed but high torque input from the main rotor shaft to a lower torque but higher speed input into the electrical generator. Together, the main rotor shaft, gearbox and generator constitute a power train of the wind turbine.

Typically, gearboxes for wind turbines include parallel gearboxes, epicyclic gearboxes, or a combination of both designs, and provide gear ratios between 1:30 and 1:140. Such high gear ratios usually require more than one gear stage which increases the size of the gearbox, and also its overall mass and cost. The mass of the gearbox contributes significantly to the overall mass of the nacelle, so it is desirable to reduce this mass to reduce the pendulum effect of the nacelle mass on top of the wind turbine tower which may reach over 100m in height, and even up to and over 160m in height.

Gear system designs with more compact layouts are known. One such gear system is known as a strain wave drive system or 'harmonic drive', and is well-known in small scale applications such as robotic joints and wheel motors. However, such systems are used as speed reducers and are generally not considered compatible as speed increasers due to issues with torque loading.

Another type of compact gear system is disclosed in US8656809B2 and US8256327B2, to Wittenstein Group. Such a gear system includes a speed reducer arrangement that features a plurality of circumferentially arranged teeth each of which is configured to move radially in a tooth carrier member. The bases of the teeth are driven by a rotatable cam member which constitutes an input drive, whilst the tips of the teeth engage on an outer ring with an inner tooth profile. The number of radially or slidably movable teeth differ from the number of teeth shapes in the ring tooth profile which causes the tooth carrier member to move at a slower rate than the input drive member. The tooth carrier member therefore constitutes an output drive member. Such `radial-moving-teeth' gearbox designs can achieve a high-speed reduction ratio between 1:10 and 1:200.

Gear systems based on radial-moving-teeth designs generally are not reverse driven largely due to reduced efficiency when operated in the reverse driven direction. There are various technical challenges associated with configuring a radial-moving tooth design gearbox to be used as a speed increasing transmission, particularly in high torque applications, at least some of which the disclosure herein is directed to address.

### Summary of the Invention

According to an aspect of the invention, there is provided a transmission, for example for a wind turbine. The transmission comprises a fixed gear ring, a first drive member rotationally supported within the fixed gear ring, the first drive member defining a plurality of radially arranged apertures each of which accommodates a tooth element, each tooth element having a tooth tip and a tooth base that are opposed along a tooth axis, the first drive member further comprising a radially outer face and a radially inner face, wherein the tooth tips of the tooth elements engage a corresponding tooth surface defined by the fixed gear ring, a second drive member which is rotationally supported within the first drive member, the second drive member defining at least one cam surface which engages each of the plurality of tooth elements, wherein the plurality of tooth elements engage the cam surface of the second drive member by way of a plurality of pivot pads, each being associated with a respective one of the plurality of tooth elements. One or more of the plurality of pivot pads comprises: a pivot pad body configured to have a pivot portion shaped for engagement with an associated one of the radially-movable tooth elements of the transmission, the pivot portion extending along a pivot axis (P), wherein the pivot pad body further comprises an integral retainer formation configured to constrain movement of the associated radially-movable tooth element with respect to the pivot portion in the direction of the pivot axis (P).

Advantageously, the retainer formation guards against movement of the pivot pad in a sideways direction with respect to the corresponding tooth element and achieves this in an elegant way by integrating the retainer formation into the pivot pad.

The retainer formation can take may different forms. In some examples the retainer formation may be embodied by mechanical fasteners such as bolts that are received into respective boltholes formed in the pivot pad body. The fasteners may be positioned on one or both lateral sides of the tooth element. The mechanical fasteners may be removable from the pivot pad body or may be welded in place for example, so that are immovable. In other examples, the retainer elements may be monolithic parts made out of a single piece with the pivot pad body.

The retainer formation may also be embodied by wall-shaped elements that extend upwardly from the pivot pad body and are located to as to flank the tooth element on each side. The wall-shaped elements may be removable from the pivot pad body, for example by being bolted to it, or may be formed as monolithic parts. Such a formation is considered to provide a strong retaining force for the pivot pad.

In one example, the retainer formation may comprise at least one retainer element that is received in a correspondingly shaped feature of the pivot portion. For example, one or more retaining blocks may be fitted into respective cut out features of the pivot portion. In this example, the shape of the retainer element may be configured to that it extends about partly or fully the entire lateral circumference of the tooth element.

The examples of the invention extend to and therefore embrace a pivot pad for a radially-moving-teeth type transmission, comprising: a pivot pad body comprising a pivot portion shaped for engagement with an associated one of the radially-movable tooth elements of the transmission, the pivot portion extending along a pivot axis (P), wherein the pivot pad body further comprises a retainer formation integrated therewith and being configured to constrain movement of the associated radially-movable tooth element with respect to the pivot portion in the direction of the pivot axis.

The invention can also be expressed as a wind turbine including a tower on which is mounted a nacelle that supports a rotatable hub, wherein the rotatable hub is coupled to a transmission as defined above.

Preferred and/or optional features of the invention are set out in the appended claims. It should be noted that preferred and/or optional features of the transmission of the first aspect of the invention, as they relate to the pivot pad thereof, may also be combined with the pivot pad of the second aspect of the invention, as defined above.

### BRIEF DESCRIPTION OF THE DRAWINGS

The present invention will now be described, by way of example only, with reference to the attached drawings, in which:
Figure 1 is a perspective view of a horizontal-axis wind turbine within which the invention may be incorporated;
Figure 2 is a perspective view of a power transmission system for the wind turbine in Figure 1, which includes a main shaft, a gearbox or transmission, and an electrical generator;
Figure 3 is an exploded perspective view of the transmission of the system shown in Figure 2;
Figure 4 is a view transversely through the transmission showing the arrangement of main components;
Figures 5a-c are a series of views showing a gear tooth element of the transmission and an associated pivot/tilt pad;
Figures 6a-c are a series of views that show the progress of one of the gear tooth elements of the transmission during a load cycle;
Figure 7 and Figures 8a, 8b show an alternative configuration of gear tooth element;
Figures 9 and 10 are alternative views of an example design of pivot pad which may be used in the transmission;
Figures 11 to 13 are views of various alternative pivot pad designs that may be used in the transmission;
Figures 14 and 15 are views of further applications for a transmission according to the invention.

### DETAILED DESCRIPTION

A specific embodiment of the present invention will now be described in which numerous features will be discussed in detail to provide a thorough understanding of the inventive concept as defined in the claims. However, it will be apparent to the skilled person that the examples of the invention may be put into effect without the specific details and that in some instances, well known methods, techniques and structures have not been described in detail in order not to obscure the invention unnecessarily.

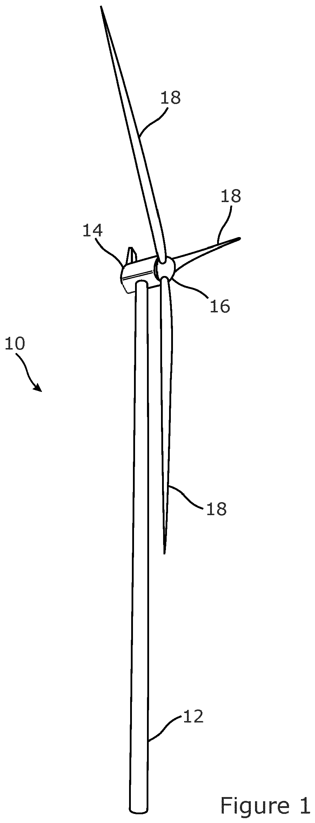

In order to place the embodiments of the invention in a suitable context, reference will firstly be made to Figure 1, which illustrates a typical Horizontal Axis Wind Turbine (HAWT) in which a generator rotor assembly according to an embodiment of the invention may be implemented. Although this particular image depicts an on-shore wind turbine, it will be understood that equivalent features will also be found on off-shore wind turbines. In addition, although the wind turbines are referred to as 'horizontal axis', it will be appreciated by the skilled person that for practical purposes, the axis is usually slightly inclined to prevent contact between the rotor blades and the wind turbine tower in the event of strong winds.

The wind turbine 10 comprises a tower 12, a nacelle 14 rotatably coupled to the top of the tower 12 by a yaw system (not shown), a rotor hub 16 mounted to the nacelle 14 and a plurality of wind turbine rotor blades 18 coupled to the rotor hub 16. The nacelle 14 and rotor blades 18 are turned and directed into the wind direction by the yaw system.

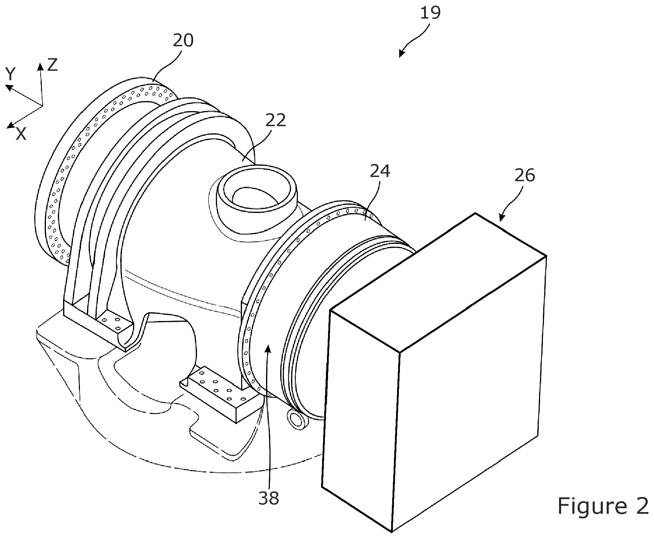

The nacelle 14 houses many functional components of the wind turbine, including the main rotor shaft, generator, gearbox, and power converter for converting the mechanical energy of the wind into electrical energy for provision to the grid. Together, these components are generally referred to as the powertrain of the wind turbine, whereas the gearbox and generator are generally referred to as the drivetrain. Figure 2 illustrates an example of a layout of part of a powertrain 19 within the nacelle 14, that layout including a main shaft 20, which extends through a main bearing housing 22, a gearbox 24 and a generator 26. The main shaft 20 is connected to, and driven by, the rotor hub 16 and provides input drive to the gearbox 24.

The gearbox 24 steps up the rotational speed of the low-speed main shaft via internal gears (not shown) and drives a gearbox output shaft (also not shown). The gearbox output shaft in turn drives the generator 26, which converts the rotation of the gearbox output shaft into electricity. The electricity generated by the generator 26 may then be converted by other components (not shown) as required before being supplied to an appropriate consumer, for example an electrical grid distribution system.

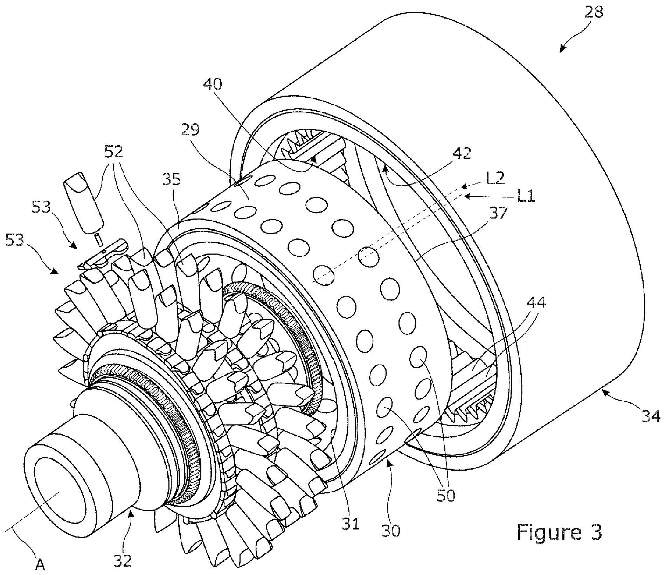

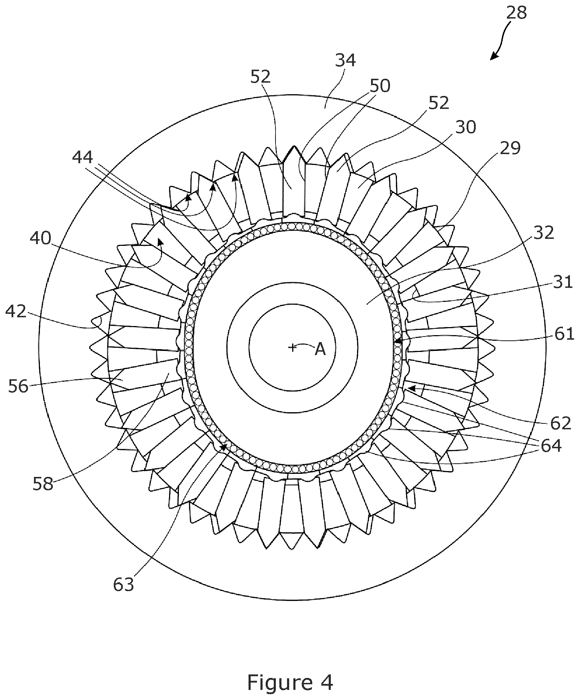

Aspects of the gearbox are shown in more detail in Figure 3 and Figure 4. Figure 3 illustrates the general arrangement of various components of the gearbox 24, as an exploded view, whilst Figure 4 shows the relative positioning of the internal components of the gearbox. Hereinafter, the gearbox components will be referred to generally as a transmission 28.

The transmission 28 comprises three main components: an input drive member 30, or 'tooth carrier', an output drive member 32, and an outer gear ring 34. The transmission 28 is configured to increase the speed of rotation between the input drive member 30 and the output drive member 32. In this context, the input drive member 30 would be coupled to the main rotor shaft 20 of the wind turbine, and the output drive member 32 would be coupled to a rotor of the electrical generator 26. The main components of the transmission as discussed above may be made of a suitable material, for example a suitable grade of cast or forged steel. In lower load applications, the components may be made from other materials such as suitable engineering plastics. The selection of the exact material for a particular application would be within the abilities of a skilled person.

At this point it should be noted that the general arrangement of the transmission is similar to the so-called "Galaxie" (RTM) drive system manufactured by Wittenstein Group. This type of system is sometimes referred to in the art as a `radial-moving-tooth' or 'slidable tooth' design, and fundamentals of the technology are described in US8656809B2 and US8256327B2, amongst others. However, such drive systems tend to be used in speed reduction applications with lighter loading and with relatively short working lives, whereas in the current context the intention is for the transmission to be used in high loading applications as a speed increaser to convert the relatively high torque and low speed input drive from the main rotor of the wind turbine (approx. 5-15 rpm) to a lower torque but higher speed output drive for the gearbox (approximately 100-1000rpm). Moreover, in wind turbine applications, gearboxes tend to be in operation for longer time periods compared to other applications, for example usually wind turbines have a working life of around 25 years.

Returning to Figure 3 and 4, the outer gear ring 34 is a rotationally fixed component which is associated with or formed as part of a main housing 38 (see in Figure 2) of the gearbox 24. Therefore, the outer gear ring 34 is in a rotationally fixed relation to the nacelle of the wind turbine.

The outer gear ring 34 is configured to define an internal gear profile 40 about its radial interior surface 42. The gear profile 40 extends circumferentially about the rotational axis of the transmission. The gear profile 40 is defined by a plurality of gear tooth sections 44 or more simply 'gear sections'.

It should be noted that the outer profile of each gear section 44 is shaped to define part of a logarithmic profile, which is a benefit in terms of force transmission with tooth members of the transmission, as will now be discussed. The precise tooth geometry is not the focus of the invention, however, and so further discussion will be omitted for clarity. Similarly, the output member 32 is rotationally supported such that it extends within or through the input member 30 so it is able to rotate therein.

The input member 30 is configured to rotate within the space defined by the outer gear ring 34. The input member 30 is associated with and is physically connected to the main shaft of the wind turbine and so rotates at the same speed. It should be appreciated that the input member 30 is not shown connected to the main shaft in the drawings. However, the input member 30 comprises a set of bolt holes on its axial surface which serve to define a connecting interface for the main shaft, or to an intermediate coupling member to couple the input member 30 to the main shaft. It should be noted that the input member 30 could also be connected to the main shaft by way of a press fit connection such as a shrink disk.

The input member 30 is annular in form and defines a radially outer facing surface 29, a radially inward facing surface 31, and first and second axial facing surfaces, 35,37. The input member 30 is configured to define a circumferentially-spaced arrangement of apertures, bores or holes 50, each of which accommodates a respective gear tooth element 52. The apertures 50 therefore act as guides for the respective tooth elements 52 and so can be considered to be guide bores, and may be referred to as such herein. The radial depth/dimension of the apertures 50 are less than the axial length of the gear tooth element so that the tips of the gear tooth elements protrude from the top surface of the input member 30. It should be noted that only two of the gear tooth elements 52 and respective apertures 50 are labelled in Figure 4 so as not to obscure detail in the Figure. The precise number of gear tooth elements 52 and respective apertures 50 is not the subject of this invention and so will not be described in detail here. However, the number may vary between about 20 and 200. Moreover, the number of gear tooth elements and gear sections may be selected to vary the gear ratio between the input member 30 and the output member 32, and also to select the relative direction of rotation between the input member 30 and the output member 32.

As is known generally in the art, the input member 30 and the output member 32 may rotate in the same direction, albeit at different rotational speeds, or they may rotate in opposite directions, and the direction of rotation is determined by the relative number of gear tooth elements 52 in the input member 30 and the number of gear sections 44 in the outer gear ring 34. Reference is made to US10830328 which discusses more details relating to the interrelation between the number of gear sections 44 and the number of slidable tooth elements 52.

The input member 30 may be configured to have a single row of apertures 50 and gear tooth elements 52. However, in the illustrated example the input member 30 has two rows 53 of apertures 50 and gear tooth elements 52, spaced appropriately along the axial direction of the transmission. Further rows are possible, although not currently envisaged. In this context, the discussion above about the numbers of teeth in a row, would apply to each row. Note that the rotational axis of the transmission is indicated in Figures 3 and 4 as 'A'. This axis preferably coincides with the axis Y in Figure 2.

As shown in Figure 3, each row of apertures 50 is spaced circumferentially about the input member 30 in an angularly equi-spaced relationship. The angular interval between apertures 50 in the rows is the same for each row in the illustrated embodiment, and may be between 2 and 20 degrees, for example, depending on the number of tooth elements. However, in theory there may be different numbers of apertures 50, and therefore tooth elements 52, in each row. In the illustrated example, where there are equal numbers of apertures 50 and tooth elements 52 in the rows, the apertures 50 in one row are angularly shifted from the apertures 50 in the other one of the rows. This can be appreciated by observing the line L1 which is taken through the centre of one of the apertures 50 in one of the rows, and line L2 which is taken through the centre of the nearest aperture 50 in the other row. As can be seen, there is a small angular shift between the apertures 50 in the two rows. The angular shift may be up to 50% of the angular interval between adjacent apertures 50. For example, the angular shift may be 5% or 10% or 20% or 30% or 40% of the angular interval between a neighbouring two apertures 50 in a particular row. For example, for a row with 30 apertures, the angular interval would be 12 degrees. The angular shift between apertures in adjacent rows may therefore be up to 6 degrees.

The rotating action of the input member 30 causes the respective gear tooth elements 52 to be driven radially inwardly by the gear profile 40 since they are slidable within the apertures 50. Since the number of gear tooth elements 52 does not match the number of gear sections 44 of the gear profile 40, the result is that each of the gear tooth elements 52 is at a different radial lift height within its respective aperture 50. This imparts a wavelike pattern of motion of the gear tooth elements 52 which in turn imparts a rotational drive force to the output member 32, as will now be described.

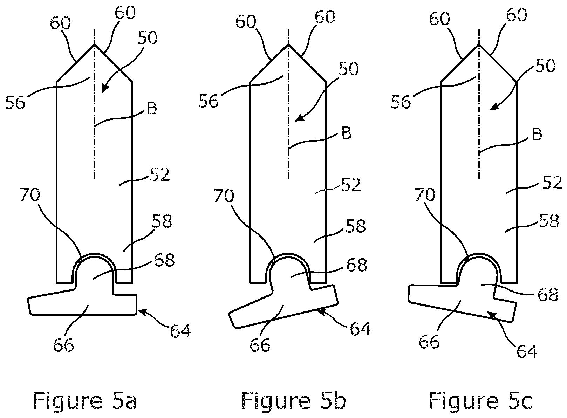

Referring to the gear tooth elements 52 in more detail, and also with reference to Figures 5a-c, it will be seen that each gear tooth element 52 includes a tooth tip region 56 and a tooth base region 58, both of which are aligned on a tooth axis B. The tooth tip region 56 is positioned radially outwardly with respect to the tooth base region 58. A tooth body region 59 extends between the tooth base and the tooth tip region 56. Although not seen clearly in Figure 3 and 4, it should be appreciated that the shape of the tooth tip region 56 is configured to compliment the shape of the respective gear section 44 of the outer ring gear 34. Each flank 60 of a tooth tip region 56 may be shaped to define a substantially flat surface, in the illustrated example, although in other examples the flanks may define a part of a logarithmic spiral or have some degree of curvature.

Whereas the tooth tip regions 56 of the gear tooth elements 52 engage with the gear profile 40 of the outer ring member 34, the tooth base regions 58 of the gear tooth elements 52 engage with the output member 32.

As can be seen in Figure 4 particularly well, the output member 32 has a non-circular shaped circumferential outer cam surface or profile 61. More specifically the shape is oval in the illustrated example. The output member 32 is therefore cam-shaped in form so as to provide a shaft cam drive with two cam peaks, in this example. Other examples may provide a single cam peak or more than two cam peaks. It is the shape of the output drive member 32 that allows the gear tooth elements 52 to drive it with a rotational motion.

In order to reduce friction between the gear tooth elements 52 and the output drive member 32, there is provided a bearing arrangement 62.

The bearing arrangement 62 comprises a plurality of pivot pads 64, only some of which are labelled in Figure 4. Each of the pivot pads 64 is associated with a respective one of the gear tooth elements 52 and acts as a fulcrum against which bears a respective base region 58 of a gear tooth element 52. The gear tooth elements 52 therefore engage the cam surface of the output member 52 to transmit a force thereto thereby acting on and driving the output member. However, the tooth element 52 act on the cam surface indirectly in this example by bearing against the pivot pads 64, although the term 'engage', 'act on' and 'driven by' in this context are considers to cover both direct engagement and also indirect engagement via the pivot pads or other functionally equivalent bearing type element.

The action of a pivot pad 64 is shown schematically in Figures 5a-c. As can be seen the pivot pad 64 includes a pad portion 66 and a pivot or fulcrum portion 68. The pivot portion 68 protrudes upwardly from the pad portion 66 and is shaped to complement a recess 70 defined in the underside of the base region 58 of the gear tooth element 52. The pivot portion 68 may define a part-spherical or part-cylindrical protrusion. As will be appreciated from the Figures, the pivot portion 68 is received in the recess 70. The precise geometry is not crucial to the invention but it should allow the pivot pad 64 to pivot smoothly with respect to the gear tooth element 52, as can be seen in the Figures, in which Figure 5a shows the pivot pad 64 in a neutral position, and Figure 5b and 5c show the pivot pad 64 tilted to the left and to the right, respectively.

The pivot pads 64 are arranged to extend about the circumferential outer surface of the output member 32. Each pivot pad 64 is associated with a respective gear tooth element 52. Since the pivot pads 64 slide on the outer surface of the output member 32, a suitable means may preferably be provided to aid lubrication between those components. This may be fulfilled by a low friction coating on the underside of the pivot pads 64 and/or a low friction coating on the outer surface of the output member 32. Alternatively, the pivot pads 64 may be mounted on a suitable sliding bearing or roller/needle bearing set 63 (c.f. Figure 4). The pivot pads 64 may be suitably coupled to one other. To constrain the pivot pads from moving about on the output drive member 32 in the axial direction, the pivot pads 64 may be received in a shallow guide channel (not shown) defined in the outer surface of the output member 32, or other functionally similar arrangement.

The benefit of the pivot pads is that they transmit the linear driving force vectors generated by the individual tooth elements more effectively into the cam-like surface of the output member 32 as that surface undulates beneath the pivot pad 64.

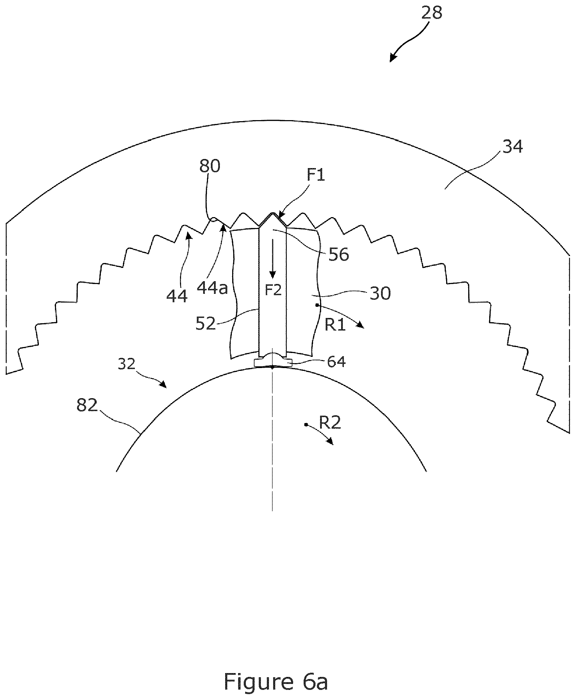

By way of further explanation, Figures 6a to 6c are a sequence of drawings that illustrates a short rotational phase of the input member 30 and the output member 32. In these Figures, only a single one of the gear tooth elements 52 is shown for the sake of clarity. However, from viewing Figures 6a to 6c, the relative movement of the input drive member 30 and the gear tooth element 52 is apparent, as is the effect that the force applied to the gear tooth element 52 has on the output member 32.

Referring firstly to Figure 6a, this can be considered a reference position at the start of a tooth loading cycle where the tip region 56 of the gear tooth element 52 is located in a trough 44a of a gear tooth section 44. It should be noted that the outer ring gear 34 is stationary, whilst the input member 30 and the output member 32 rotate relative to it, but at different rotational speeds. The direction of rotation of the input drive member 30 is labelled as R1 in Figure 6a, and can be seen as being clockwise in this example. Similarly, the direction of rotation of the output member 32 is labelled as R2, and is also clockwise, in this example. As noted above, the input and output members 30,32 may be configured to rotate in opposite directions in some examples.

At this point, it will be noticed that although a single gear tooth element 52 is shown, the input drive member 30 is shown in partial form for clarity. The movement of the input drive member 30 can be appreciated by the movement of the gear tooth element 52 relative to the outer gear ring 34 by comparing the position of the gear tooth element 52 with the gear section 44 with which it is engaged in Figures 6a-6c. Notably, in Figure 6a the output member 32 is in a rotational position at which the height of the cam shape is at a maximum. The cam shape provided by the output member 32 can therefore be considered as in a top dead centre position in Figure 6a.

As the input member 30 is driven in a clockwise direction, a force will be exerted on the tip region 56 of the gear tooth element 52 by a rising flank 80 of the gear tooth section 44. This force is shown on Figure 6a as F1. A component of force F1 will be in the vertically downwards direction (in the orientation of the drawings), and is shown here as F2. The gear tooth element 52 will therefore start to exert a force on the cam shaped surface of the output drive member 32 via the pivot pad 64 as the output member 32 rotates, and as the gear tooth element 52 passes the top position as shown in Figure 6a.

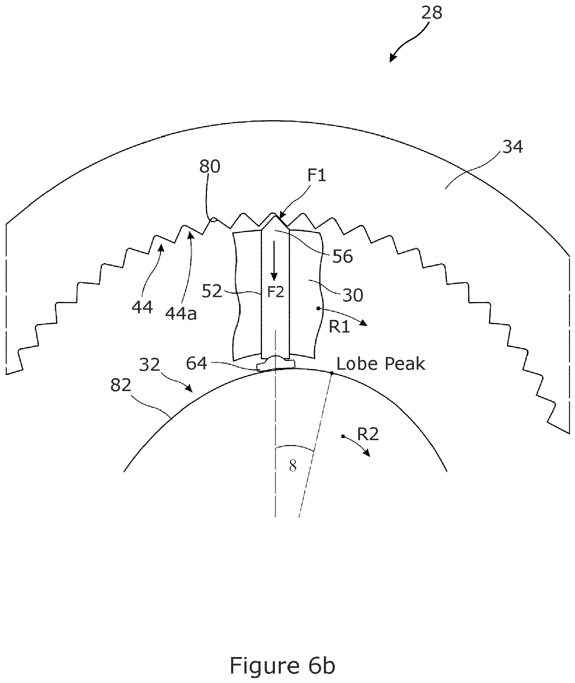

Comparing Figure 6b with Figure 6a, it will be seen in Figure 6b that the output member 32 has rotated in the clockwise direction by an angle Θ of about 20 degrees. Conversely, the gear tooth element 52 has only moved relative to the outer ring member 34 by a small fraction of a degree, which illustrates the speed increasing configuration of the transmission 28.

As can be seen, the cam shape of the output member 32 has changed position in Figure 6b such that the vertical force F2 applied by the gear tooth element 52 via the pivot pad 64 now acts on a falling slope 82 of the cam shape. The gear tooth element 52, therefore contributes a rotational force to the output drive member 32, which combines with the forces generated by the other gear tooth elements to drive the output member 32 in rotation.

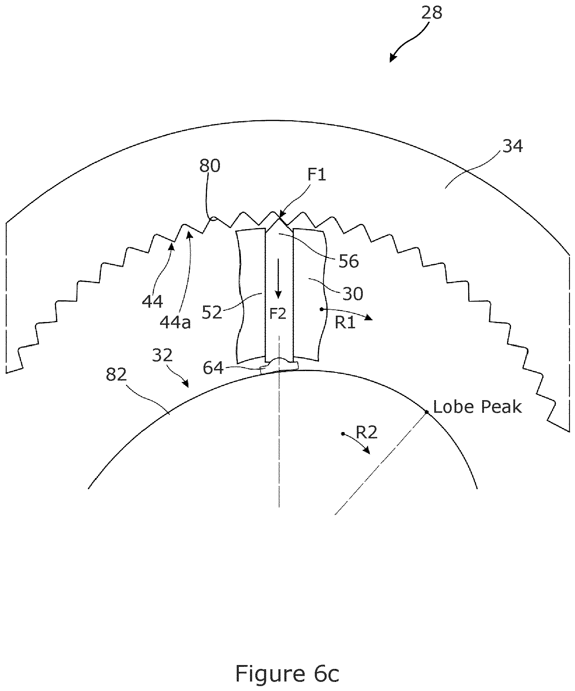

Figure 6c is substantially the same as Figures 6a and 6b, although shows the gear tooth element 52 a step further along its loading cycle. Once the gear tooth element 52 has gone through a load cycle, as shown, it is driven outwardly by the cam surface of the output member 32 and is not loaded during this movement.

Having described the general arrangement of the transmission 28, the discussion will now focus on various aspects associated with a particular design of tooth element 52 for the transmission 28.

In the examples of the invention discussed above, various features of tooth elements have been described and shown. In general, the tooth elements comprise a cylindrical tooth body which transitions to a tapered tooth tip or head region which terminates at a tip or point. The tooth body in the illustrated examples are cylindrical and match the tooth apertures/guides so they can slide relative thereto. Although the tooth elements and apertures/guides are shown as having a circular cross section, other cross sections are acceptable in principle.

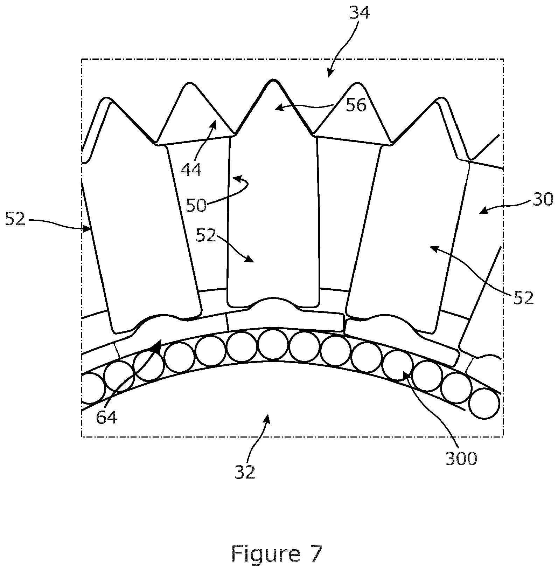

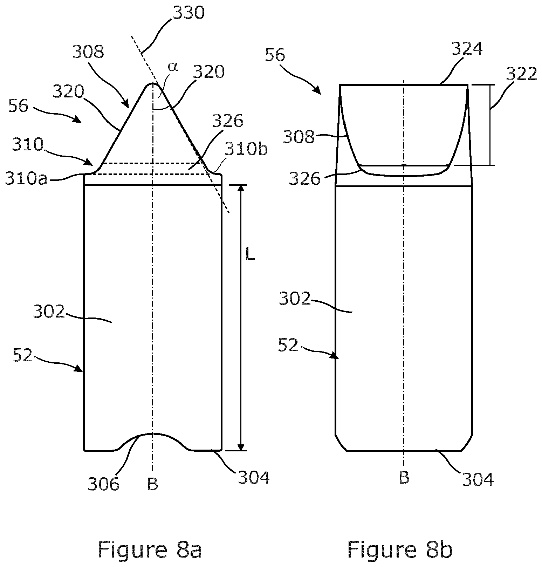

Another form of tooth element is shown in Figure 7 and Figures 8a and 8b. The same reference numerals will be used in these Figures to refer to features in common and/or equivalent with the previously illustrated examples.

In Figure 7, three tooth elements 52 are shown in their respective aperture 50 of the input member 30. The outer gear ring 34 is also shown in part, as is the output member 32, together with the pivot pads 64 and a bearing layer 300 that is intermediate the outer surface of the output member 32 and the pivot pads 64. It will be appreciated that the tooth member 52 shown in the centre of the image is in a 'top dead centre' position relative to its respective gear tooth section 44, whereas the other tooth elements 52 are in in slightly laterally shifted positions.

With reference also to Figures 8a and 8b, it will be apparent that the tip region 56 is shaped differently to the previous examples.

The tooth element 52 comprises a tooth body 302 having a tooth base 304 which is configured for engagement with an adjacent pivot pad 64 (not shown in Figs 8a/b) by virtue of a recess 306 defined therein.

The tooth tip region 56 is adjacent the tooth body 302 distal from the tooth base 304.

The tooth tip region 56 is defined by a flank section 308 that is demarked from the tooth body 302 by a shoulder 310. As seen in Figure 8a, there is provided a left shoulder 310a and a right shoulder 310b.

The shoulders 310 are intermediate the top of the tooth body 302 and the flank section 308 of the tip region 56. The shoulders 310 and flank section 308 together form the tooth tip region 56 of the tooth element 52.

Over a body length L along the longitudinal axis B of the tooth element 52, the tooth body 302 has a substantially constant cross-section, which is circular in this example, although this need not be the case and other cross sectional profiles are acceptable. Where the cross section is not circular, that cross section profile may be substantially constant along the longitudinal length of the tooth body 302. The tooth body 302 is in contact with the tooth aperture 50 or "guide" of the input member 30 over the length of the tooth body 302 and so forces can be transmitted between the tooth element 52 and the respective aperture via the contact surfaces, contact lines or contact points.

The flank section 308 comprises tooth flanks 320, which can engage with the corresponding surfaces of the gear tooth sections 44 on the outer gear ring 34.

Figure 8b shows the tooth element 52 when viewed perpendicularly from a tooth flank 320. It will be apparent that the tooth flank 320 is a predominantly flat surface that extends from the tip of the tooth towards the tooth body 302, and particularly the shoulder 310.

The tooth flanks 320 comprise a straight substantially planar section, labelled as 322, and first/second transition sections 324, 326. The substantially planar section 322 may have some curvature, although it is shown as planar in the figures. The first transition section 324 is located towards the tip end of the flank 320 and extends towards the tip to provide a somewhat rounded end rather than a sharp tip shape, thereby reducing stress concentrations. The second transition section 326 is located at the other end of the flank 320 and merges into the shoulder 310.

The flanks 320 define an angle with respect to the tooth axis B. As shown, the angle α of each flank is around 30 degrees, although this is just exemplary and other angles would be acceptable. As a result, the cone angle of the tooth tip is approximately 60 degrees. Currently it is envisaged that cone angles between 30 and 60 degrees would be acceptable, by way of non-limiting example. As will be appreciated from Figures 8a and 8b, the tip region 56 is symmetrical about tooth axis B in this example.

The presence of the shoulders 310 mean that a step is formed between the upper end of the tooth body 302 and the flanks 320. As such, a flank line 331 corresponding to a medial tangent to the tooth flank 320 as seen in Figure 8a intersects a volume of the tooth body 302.

The shoulder 310 provides a curved, rounded or concave transition between the top of the tooth body 302 and the angled flank 320. As can be seen, the axially lower end of the shoulder 312 is horizontal, from which point the shoulder 310 curves upwardly through the lower transition section 326 to blend into the flank 320. The curvature of the transition section 326 may be radiused. The shoulder 312 and transition section 326 may be machined more finely than the tooth flank 320.

An advantage of the provision of the shoulders 310 with respect to the tooth flanks 320 may be that splash losses in the contact of the tooth element with the gear profile may be reduced. The surface area of the tooth flank may in particular be reduced by the shoulders 310, whereby lubricating oil needs to be displaced from a smaller surface.

The tooth elements of the invention may be any suitable material, but currently it is envisaged that a suitable grade of stainless steel is most appropriate in high load applications. However, in other applications materials other than steel may be appropriate such as plastics. Similar considerations apply for the material of the outer ring gear, the input member and the output member. At least a part of the tooth element is configured to be flexurally rigid. The term "flexurally rigid" should in this case be typically understood technically to mean that bending deformations of the teeth are so small due to the rigidity of the material of the teeth that they are at least substantially unimportant for the kinematics of the gearing. Flexurally rigid teeth comprise in particular teeth made of a metal alloy, in particular steel, or a titanium alloy, a nickel alloy or any other alloys. Furthermore, flexurally rigid teeth of plastics may also be provided, in particular in transmissions in which the outer gear ring and the input/output member are also made of plastics. Metal/alloy components offer the advantage that they are extremely torsionally rigid and withstand high loads. Gearings of plastics offer the advantage that they have a low weight. The term "flexurally rigid" means in particular a flexural rigidity about a transverse axis of the tooth. This means in particular, that when the tooth is viewed as a rod from a tooth base to a tooth flank area, a flexural rigidity is given at least substantially excluding bending deformations between the tooth flank area and the tooth base. Due to the flexural rigidity, a very high resistance to load and torsional rigidity of the gearing are achieved.

Having described the general arrangement of a radially-movable-teeth type transmission, this discussion will now turn to examples of pivot pads that may be used in such a transmission. Some examples of pivot pads have already been described above, and the following discussion will focus on an example of pivot pad with distinct functional advantages compared with pivot pad configurations that are known in the art.

A challenge that has been appreciated in the development of such radially-movable-teeth transmission is the tendency for the pivot pads to shift sideways relative to the sliding tooth with which it is paired. In one approach, this sideways movement may be constrained by configuring the tooth element with a downwardly-extending pin that is received into a corresponding pocket on the pivot pad. The pivot pad and the pin are not connected to one another. Such a structural feature ensures that the pivot pad stays centred underneath its respective sliding tooth element. However, alternative solutions are desirable.

The following examples of pivot pad incorporate features to alleviate this problem.

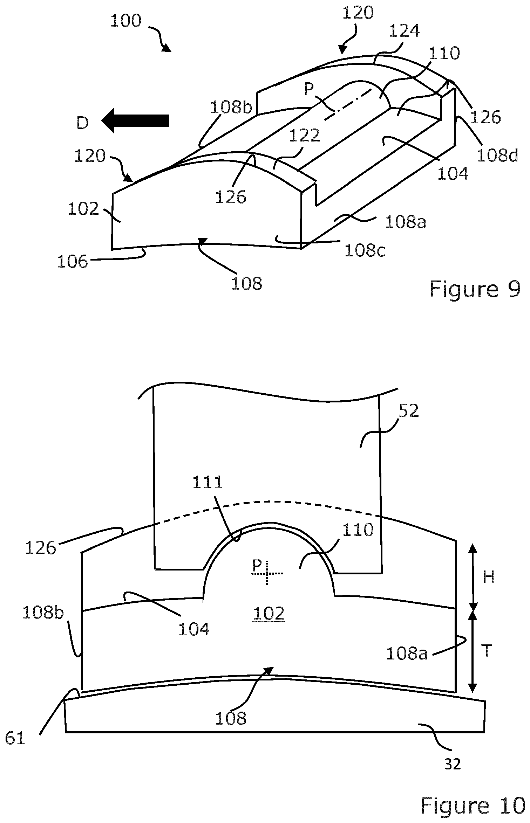

With reference firstly to Figure 9 and 10, there is shown a pivot pad 100 in isolation from the other components of the transmission described above. The pivot pad 100 is suitable for use in such a radially-movable-teeth style design of transmission. As can be appreciated, the pivot pad 100 includes a pivot pad body 102 that defines a first, upper, surface, 104 and a second, lower surface 106. The terms 'upper' and 'lower' are used with reference to the orientation in the drawings, and also in the context of the transmission that has been described above, with the pivot pad 100 being positioned underneath a respective tooth element 52. Thus, the term 'upper' is used in the sense that the upper surface 104 is radially further outward than the 'lower' surface 106.

The pivot pad body 102 has a general form of a relatively flat rectangular element in the illustrated example when seen from above, although that is not essential. Therefore, in plan profile, the upper and lower surfaces 104,106 have the same general form.

A side edge surface 108 extends between the upper surface 104 and the lower surface 106. In the illustrated example, the side edge surface 108 is rectilinear and so defines first, second, third, and fourth side edge surface portions 108a-d. It should be noted at this point that a rectilinear profile of the side edge surface 108 is just exemplary and not essential, and the side edge surface 108 may have a different shape. For example, it may be provided with various protrusions and recesses that allow it to fit against adjacent pivot pads.

The first and second side edge surface portions 108a, 108b are oriented generally so that they are transverse to the direction of travel `D' of the pivot pad 100. As such, the first and second side edge surface portions 108a,108b are parallel to one another, in this example.

The third and fourth edge surface portions 108c,108d are orientated generally so that they are aligned with the direction of travel D of the pivot pad 100. As such, the third and fourth side edge surface portions 108c,108d are parallel to one another. In the illustrated example, the first and second edge surface portions 108a, 108b are mutually perpendicular to the third and fourth side edge surface portions 108c,108d, that is to say, they form a rectangular profile, in plan view, although this is not essential.

The upper surface 104 of the pivot pad body 102 is generally flat but shaped for engagement with a radially-movable tooth element of the transmission. Therefore, the upper surface 104 defines a pivot or 'fulcrum' portion 110. The pivot portion 110 comprises a raised formation that stands proud of the remaining area of the upper surface 104.

In the illustrated example, the pivot portion 110 is generally semi-circular in form, when viewed from the side as in Figure 9. Moreover, the pivot portion 110 extends along a pivot axis P between the third and fourth edge surface portions 108c,108d and has a uniform shape along its length. It should be noted that this particular shape is not essential and merely provides one example of a pivoting formation that interfaces suitably with the underside of a tooth element 52 to allow some relative tilting movement as has been discussed above in more detail. Figure 10 shows the pivoting interface between the pivot portion 110 and the underside of the tooth element 52 that defines a recess 111.

It is envisaged that in some examples it may be acceptable to reverse this arrangement so that the pivot portion 110 is defined by a recess or trough, and the underside of the tooth element 52 is provided with a semi-circular recess that is shaped to complement the shape of the trough. Both arrangements are believed to enable the pivot pad 100 to pivot relative to the tooth element 52.

The lower surface 106 is shaped for engagement with the cam surface 61 of the transmission as described above and so has a curved underside. It should be noted that the curvature is slight in the illustrated embodiment because the dimension of the pivot pad 164 in the direction of travel is small compared to the dimension of the cam surface 61. Moreover, the upper surface 104 surrounding the pivot portion 110 is also formed with a curvature to match that of the lower surface 106, although this is not essential.

In this example, the lower surface 106 is a singly curved surface as is consistent with its function to slide along the cam surface 61. However, it is envisaged that in some circumstances a doubly curved surface may be acceptable.

The pivot pad body 102 is provided with a retainer formation 120. The retainer formation 120 is configured to prevent the pivot pad 100 sliding sideways with respect to the tooth element. By 'sideways', it should be noted that this is in a direction parallel to the first and second side surface portions 108a,108b, and in the direction of the elongated pivot portion 110, that is, in the direction of the pivot axis P. Expressed another way, the term 'sideways' may be taken to be a direction transverse to the direction of motion D of the pivot pad 100, in use.

The retainer formation 120 may be embodied in different ways to achieve the same technical result. An example of an implementation is shown in Figures 9 and 10. Notably the retainer formation 120 is integral with the pivot pad body 102. This may mean that the retainer formation 120 forms a monolithic part with the pivot pad body 102, or that it is formed by one or more parts that are fixed to the pivot pad body 102 but may be removed from it, for example through the use of releasable mechanical fasteners. Further, the retainer formation 120 may be suitably bonded or otherwise affixed to the pivot pad body 102, e.g. by an adhesive or welding.

With specific reference to the example in Figures 9 and 10, the retainer formation 120 is formed from first and second retainer elements 122 and 124 that project from the pivot pad body 102 in an upwards direction, in the orientation of the drawing. Here, the first and second retainer elements 122,124 are in the form of respective wall-shaped parts that are elongated in the direction aligned with the third and fourth side edge surface portions 108c,108d.

As can be seen, the first retainer element 122 is spaced from the second retainer element 124 along the direction of the pivot portion 110. In Figures 9 and 10, the first and second retainer elements 122,124 are spaced from one another at extreme ends of the pivot pad body 102 so that they form upwardly rising end-wall extensions of the pivot pad body 102.

Therefore, the first and second retainer elements 122,124 are located one-on-each-side of the tooth element 52, as can be perceived in Figure 10.

In this particular example, the retainer elements 122,124 rise up above the surrounding upper surface 104 of the pivot pad body 102 by a distance or 'height' that is sufficient to present a constraining sideways forward to the tooth element 52. The exact height of the retainer elements 122,124 may be selected appropriately. It is envisaged that the height of the retainer elements 122,124 may be greater than 20% of the thickness of the underlying part of the pivot pad body 102. By way of further illustration of this point, Figure 10 shows the pivot pad body 102 from a side view and, more specifically, from a viewing perspective of one of the third or fourth side surfaces 108c,108d.

Here it will be appreciated that the pivot pad body 102 has a thickness T at a point directly underneath the retainer element 122,124. It should be noted that the thickness of the pivot pad body 102 is generally uniform apart for the pivot portion 110, although this may not be the case in all examples. The retainer element 122,124 also has a generally uniform height along its length, in this example. However, at its end point it has a height that is comparable to the thickness of the pivot pad body 102 at that position. It is envisaged that the height H of the wall-shaped retainer element 122,124 may be between about 20% and about 100% of the underlying part of the pivot pad body 102.

The wall shaped retainer elements 122,124 have an upper surface 126 that is curved, in the illustrated example. Here, the upper surface 126 curves smoothly between the ends of the retainer element 122,124, although this is not essential. The curvature of the upper surface 126 of the retainer elements 122,124 may be slightly greater (i.e. reduced radius of curvature) than the curvature of the upper surface 104 of the pivot pad body 102. An effect of this configuration is to provide a greater degree of resilience to sideways force at the centre of the wall-shaped retainer elements 122,124.

In Figures 9 and 10, it will be noted that the wall-shaped retainer elements 122,124 are formed from the same block of material as the pivot pad body 102 and so can be considered to be monolithic. Such a configuration is convenient to manufacture in some respects because it can be milled from a single block of metal or injection moulded, for example, as a single metal or plastics part. A monolithic form would also be achieved by welding, bonding or otherwise irreversibly joining the retainer elements 122,124 to the pivot pad body 102. However, other configurations would be acceptable in which the retainer elements 122,124 are not formed as monolithic features with the pivot pad body 102.

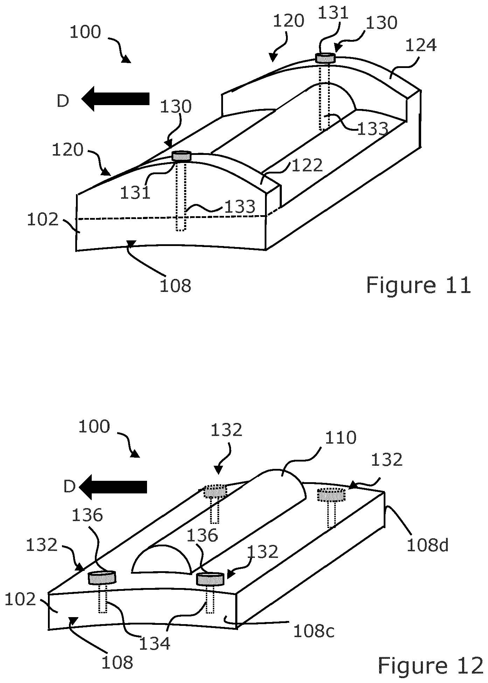

Figure 11 shows an example of an alternative configuration. As can be seen, the pivot pad body 102 comprises the same or similar wall-shaped retainer elements 122,124. However, each of the retainer elements 122,124 are separable from the pivot pad body 102 as they are different parts. In this case, the separable retainer elements 122,124 may be fixed to the pivot pad body 102 by various means. One example is shown in Figure 11, in which mechanical fasteners such as bolts 130 are used to fix the retainer elements 122,124 to the pivot pad body 102. Here, a single bolt 130 is used to fix a respective one of the retainer elements 122,124 to the pivot pad body 102. A head 131 of the bolt 130 protrudes above the respective retainer element 122,124, whilst a shank 133 of the bolt 130 extends through the respective retainer element 122,124 and into the pivot pad body 102. Note that the head 131 could be countersunk into the retainer element 122,124.

Such an arrangement may be used in the event that one or both of the retainer elements 122,124 were displaying signs of wear and so needed to be replaced.

In the illustrated examples, it will be noted that the pivot pad 100 is provided with first and second retainer elements 122,124, located one on each side of the pivot bad body 102. This is useful because it means that the pivot pad 100 is constrained with respect to movement relative to the tooth element 52 in both sideways directions as the pivot pad 100 slides on the cam surface 61. However, in some examples it may be acceptable for only a single retainer element to be provided. This may be appropriate where one side of the pivot pad 100 is backed by another constraining surface, for example a wall of the transmission housing.

A further example of a pivot pad 100 in accordance with the invention is shown in Figure 12. In this example, the retainer formation 120 is also integral with the pivot pad body 102, in such a way that it is fixed to and moves with the pivot pad body 102, but may or may not be separable from it. However, in this example the retainer formation 120 comprises a plurality of retainer elements 132 in the form of mechanical fasteners such as bolts. Figure 12 show four possible locations for the bolt-like retainer elements 132. Two of the bolt-like retainer elements 132 are provided adjacent the third side edge surface 108c of the pivot pad body 102. Two optional retainer elements 132 are shown in dashed lines and are provided at positions adjacent the fourth side edge surface 108d of the pivot pad body 102.

As can be seen, the bolt-like retaining elements 132 are received in suitable holes in the pivot pad body 102 such that shanks 134 of the bolt-like retainer elements 132 are received into the pivot pad body 102 whereas heads 136 of the bolt-like retainer elements 132 stand proud of the upper surface 104 of the pivot pad body 102.

It is envisaged that this example configuration of pivot pad 100 would lend itself to retrofitting of existing pivot pads with a retainer formation 120 because mechanical fasteners such as bolts can be inserted at selected locations on the upper surface 104 of the pivot pad body 102 simply by drilling bolt holes at appropriate locations. Bolt-like retainer elements 132 of the type shown and described may be arranged in other locations compared to what is shown here. As a result, the positions of the retainer elements 132 may be adapted to the size of footprint of the tooth element. Therefore, retainer elements can be positioned in further-apart locations for larger-diameter tooth elements and, conversely, may be positioned closer together for smaller-diameter tooth elements.

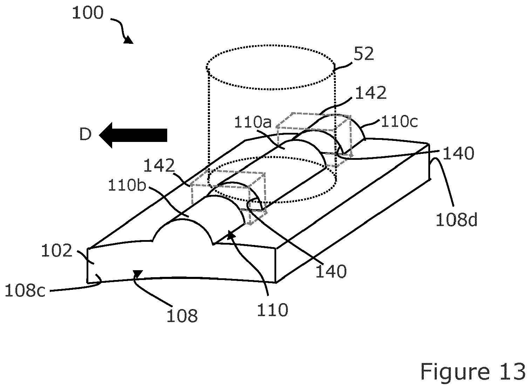

A further example pivot pad 100 is shown in Figure 13. Here, the pivot portion 110 extends the entire length of the pivot pad body 102, in a direction transverse to the direction of travel D. However, the pivot pad portion 110 includes a pair of gaps or cut outs 140.

The cut outs 140 are each spaced a respective distance from a side end surface 108c,108d of the pivot pad body 102. This results in a central segment 110a of pivot portion 110 being separated from side segments 110b, 110c of pivot portion 110. The side segments 110b,110c therefore represent a retainer formation 120 of the pivot pad 100 which are able to retain sideways movement of a tooth element 52. Note that a tooth element 52 is shown in dashed form in Figure 13 to represent its position only.

Stopping parts in the form of "stop blocks" 142 are received into the cut outs 140 in order to provide a raised area to restrict sideways movement of the pivot pad 100 with respect to the tooth element 52. The stop blocks 142 are shown in ghosted form in Figure 13 so as not to obscure detail of the pivot pad body 102 unnecessarily.

Each of the stop blocks 142 may be inserted into a respective one of the cut outs 140 by way of a press fit or may be secured therein by an appropriate bonding or welding technique. The stop blocks 142 could also be bolted in place, in other examples, such that they are held securely within the cut outs 142 and in effect form an integral part of the pivot pad body 102.

Although two stop blocks 142 are provided in Figure 13, it is also envisaged that the two stop blocks 142 could in effect be joined together to encircle the base of the tooth element 52. In this way, for example, the two stop blocks 142 would be combined into a single stop block 142 that may be ring-like in form, for example circular or a form of polygon. In the case where the tooth element 52 is substantially circular in cross section, then a circular stop block 142 may be appropriate. In principle, the retainer formation in the form of stop block 142 may have an annular or part-annular shape so that it extends about at least partly the base of the tooth element 152 to ensure it remains in position.

An arrangement like that in Figure 13 may be convenient to manufacture since relatively simple structural adjustments may be made to the pivot portion 110 of the pivot pad body 102 to form the cut outs 140 and add the stop blocks 142 thereby forming the retainer formation 120 to restrain sideways movement of the tooth element 152 with respect to the pivot pad 100.

In a further alternative example, a retainer element may be formed by an upstanding projection such as a retaining post or other formation that extends away from the pivot portion 110 at a generally central location along its length. A suitable adaptable may be made to the corresponding tooth element which may be in the form of a recess or bore shaped to receive the retaining post with appropriate clearance. The retaining post may then be received into the recess in the tooth element when the transmission is assembled and the two parts then fit in a complementary way to restrain sideways movement between them. Such a variant may be advantageous in terms of manufacture since a retaining post may be press fitted into a drilling provided on the pivot portion 110, which arrangement lends itself to retrofitting. However, the necessarily small geometry of the retaining post may make it vulnerable to wear, in use.

Many modifications may be made to the specific examples described above without departing from the scope of the invention as defined in the accompanying claims. Features of one embodiment may also be used in other embodiments, either as an addition to such embodiment or as a replacement thereof.

In the above discussion, the speed increasing transmission has been described as used in a wind turbine powertrain as a means of increasing the rotational speed of the main shaft to a speed suitable for an input shaft of an electrical generator.

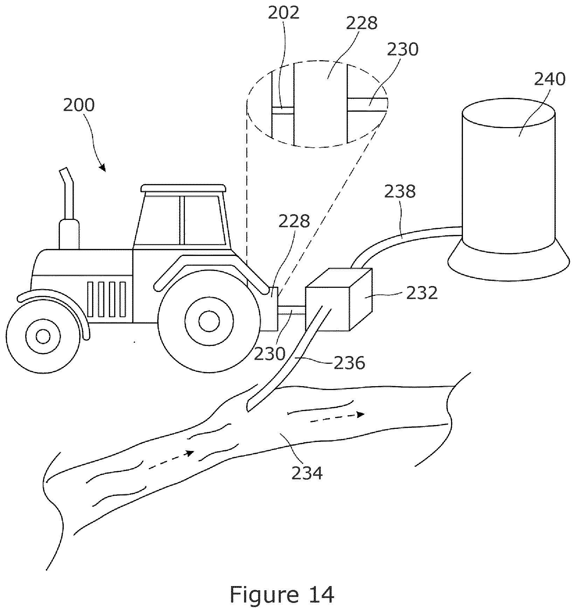

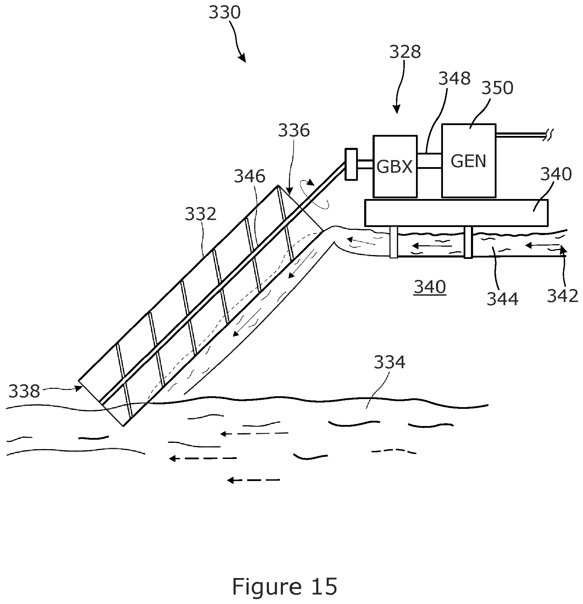

The skilled person would understand that this is not the only application for such a transmission. Figures 14 and 15 illustrate two further applications, by way of example, within which the transmission may be used. In the following discussion, the internal details and functionality of the transmission can be assumed to be the same as described above.

With reference firstly to Figure 14, the transmission of the invention may be used in agricultural gearbox applications. For example, here an agricultural machine such as a tractor 200 provides a power take off coupling 202, which is a rotating shaft that is driven by the engine of the tractor 200, as is known in the art. The power take-off coupling 202 may typically be driven at between 200 and 600 rpm, and is dependent on engine speed. For some agricultural applications, that rotational speed may be sufficient. However, for other applications a higher rotational speed may be required. Therefore, in Figure 14 a transmission 228 according to the invention is provided that receives as a drive input the power take off coupling 202 from the tractor 200. Here, the transmission 228 is shown attached to the tractor 200, but this is not essential, particularly if mobility is not required. The transmission 228 converts the relatively high torque and low speed drive input from the power take off coupling 202 to a higher speed but lower torque drive input 230 to a hydraulic pump 232. As an example, the rated running speed of the pump may be between 1200 and 2000 rpm. The hydraulic pump 232 may be a gear pump or any other suitable form of pump. In the illustrated application, the pump 232 is used to draw water from a nearby stream 234 through an input pipe 236 and pump the water through an outlet pipe 238 to a water storage container 240.

Beneficially, the technical advantages of the transmission of the invention such as low backlash and smooth operation minimises further vibration on the power take off coupling 202 and reduces operational noise for the operator of the machinery.

A further application is shown in Figure 15 in which a transmission 328 according to the invention is integrated into a hydrodynamic power generation system 330.

The generation system 330 includes a so-called Archimedes screw device 332 arranged at an inclined angle with respect to a flowing body of water such as a river or stream 334.

An inlet 336 of the screw device 332 is arranged at an upper end, and a discharge or outlet 338 is arranged at the lower end thereof. The general form of screw device is conventional.

A suitable structure 340 is provided to create a feed channel 342 through which is fed a flow of water 344 to the inlet 336 of the screw device 332 which causes it to turn, as is well known. The structure 340 may be an earth or concrete bank, for example, but other structures are possible.

The screw device 332 comprises a drive shaft 346 which supports the screw device 332 on suitable bearings (not shown) and which provides an output drive. The drive shaft 346 is connected to the gearbox or transmission 328 in accordance with the invention. Since the screw device 332 only has a low rate of rotation, for example 0.2 to 1Hz, the transmission 328 provides a speed increasing function. As such, the transmission 328 includes an output drive shaft 348 which is coupled to an electrical generator 350.

It will be appreciated that the compact arrangement of the transmission according to the invention, and other advantageous characteristics such as low noise and low backlash, make it beneficial for such applications where installation space is at a premium. In addition, the low backlash and smooth operations reduces wear on the other components included in the powertrain.

In the examples of the invention discussed above and shown in the accompanying Figures, the transmission has been described as a speed increasing transmission wherein the input member 30 receives rotational drive from the main shaft of the wind turbine at a relatively low speed, and the output member 32 provides a higher rotational output speed to the generator 26. Although this is the application currently envisaged for the transmission, which will be technically advantageous for applications outside wind turbines, as is evidenced by Figure 14 and 15, it should be noted here that the transmission of the invention could also be 'back driven', meaning that it could be used as a speed reducer transmission. In such a situation, therefore, the radially inner output member 32 as described above may receive rotational drive from a prime mover, e.g. such as an internal combustion engine or electric motor, having a relatively high rotational speed and relatively low torque, whereas the radially outer input member 30 as described above would then provide the onwards drive to a load, for example a vehicle drive train or hoisting system, having a lower output speed but higher torque. In this context, therefore, the input member 30 of the transmission may be considered more generically as a first drive member whereas the output member 32 may be considered more generically as a second drive member. In either mode of operation, i.e. when operated as a speed increasing transmission or a speed reducing transmission, it is the case that rotational driven movement of the input member 30 causes radial movement of the tooth elements 52. In contrast, when the output member 32 is driven, it is the rotation of the output member 32 that causes radial movement of the tooth elements 52 which, in turn, means that the input member 30 also rotates. However, in this operational mode, the transmission may also be back-driven meaning that the rotational movement of the input member 30 causes radial movement of the tooth elements. Therefore, it can be considered that rotational movement of the input member 30 is associated with, or linked to, radial movement of the tooth elements 52.

This invention is most preferred in mainly one-direction applications, which will often be high torque applications, for example the wind turbine applications discussed above. However, the present invention may also find use in other areas where it is desired to have high power density, high torque density, large hollow shaft ratio, advantageous damping behaviour, high rigidity, zero or reduced play or backlash, high synchronization, or in general a compact design. Even for two-direction applications, such as robotics, machine tools, industrial drive-trains, servo-motor-torque-speed-downs, packaging machines and milling machines the present invention will also be an improvement over the known prior art.

In the above discussion, the transmission comprises a lubrication system that feeds lubrication fluid to specific locations and components within the transmission as this tends to be an efficient way to achieve sufficient lubricity whilst reducing fluid requirement. Since lubrication fluid is delivered to the points of need, the lubrication system of the invention can be considered to be a "dry sump" system which does not have a fluid collector/sump/bath within which lubrication fluid can collect and through which components of the transmission may pass, or in which components may at least partly be immersed, in order to aid lubrication. However, it is envisaged that in some examples of the invention the transmission may further be configured to include a sump or oil bath. This can serve as a fluid collector for lubrication fluid to be fed back to the main fluid tank, and/or it can also be configured such that various components can be exposed to the fluid in the sump during rotation, for example the input/output members and the tooth elements.

In the examples of the invention discussed above, various features of tooth elements have been described and shown. In general, the tooth elements comprise a cylindrical tooth body which transitions to a tapered tooth tip or head region which terminates at a tip or point. The tooth body in the illustrated examples are cylindrical and match the tooth apertures/guides so they can slide relative thereto. Although the tooth elements and apertures/guides are shown as having a circular cross section, other cross sections are acceptable in principle.

## Claims

1. A transmission comprising:
a fixed gear ring (34),
a first drive member (30) rotationally supported within the fixed gear ring, the first drive member defining a plurality of radially arranged apertures (50) each of which accommodates a tooth element (52), each tooth element (52) having a tooth tip (56) and a tooth base (58) that are opposed along a tooth axis, the first drive member (30) further comprising a radially outer face (29) and a radially inner face (31), wherein the tooth tips of the tooth elements (52) engage a corresponding tooth surface (44) defined by the fixed gear ring (34),
a second drive member (32) which is rotationally supported within the first drive member (30), the second drive member (32) defining at least one cam surface (61) which engages each of the plurality of tooth elements,
wherein the plurality of tooth elements (52) engage the cam surface (61) of the second drive member (32) by way of a plurality of pivot pads (64;100), each being associated with a respective one of the plurality of tooth elements (52),
wherein one or more of the plurality of pivot pads (64; 100) comprises:
a pivot pad body (102) configured to have a pivot portion (110) shaped for engagement with an associated one of the radially-movable tooth elements of the transmission, the pivot portion (110) extending along a pivot axis (P),
wherein the pivot pad body (102) further comprises an integral retainer formation (120) configured to constrain movement of the associated radially-movable tooth element (52) with respect to the pivot portion (110) in the direction of the pivot axis (P).

2. The transmission of Claim 1, wherein the retainer formation (120) comprises at least one retainer element (122,124,130,132) that projects from the pivot pad body (102) thereby to constrain movement of the associated radially-movable tooth element (52).

3. The transmission of Claim 2, wherein the at least one retainer element (122,124,130,132) comprises at least one elongate wall thereby defining a wall-shaped retainer element (122,124) that extends between first and second ends along the pivot pad body in a direction transverse to the pivot axis (P).

4. The transmission of Claim 2, wherein the wall-shaped retainer element (122,124) has a lower height at the first and second ends thereof compared to a raised central region.

5. The transmission of Claim 3, wherein the wall-shaped retainer element (122,124) has an upper surface (126) that curves smoothly between the first and second ends of the wall-shaped retainer element (122,124).

6. The transmission of Claims 2 to 5, wherein the first and/or the second end of the wall-shaped retainer element is raised above the pivot pad body by a distance greater than 20% of the thickness of the underlying part of the pivot pad body and, optionally, less than 100% of that distance..

7. The transmission of Claims 2 to 6, comprising a pair of retainer elements (122,124,130,132) that are spaced apart along the pivot axis (P).

8. The transmission of any one of Claims 1 to 7, wherein the retainer formation (120) forms a monolithic part with the pivot pad body.

9. The transmission of any one of Claims 1 to 7, wherein the retainer formation (120) is fixed to but separable from the pivot pad body (102).

10. The transmission of Claim 9, wherein the retainer formation (120) is releasably fixed to the pivot pad body (120) by respective mechanical fasteners (130).

11. The transmission of Claim 2, wherein the one or more retainer elements are in the form of mechanical fasteners (132) which are removably engaged with the pivot pad body (102).

12. The transmission of Claim 2, wherein the retainer formation (120) comprises at least one retainer element (142) that is received within a correspondingly-shaped feature of the pivot portion (110).

13. The transmission of Claim 12, wherein the at least one retainer element (142) is annular or part-annular in form so as to extend about at least a portion of the tooth element (152).

14. A pivot pad (164) for a radially-moving-teeth type transmission, comprising:
a pivot pad body (102) comprising a pivot portion (110) shaped for engagement with an associated one of the radially-movable tooth elements (52) of the transmission, the pivot portion (110) extending along a pivot axis (P),
wherein the pivot pad body (12) further comprises a retainer formation (120) integrated therewith and being configured to constrain movement of the associated radially-movable tooth element (52) with respect to the pivot portion (110) in the direction of the pivot axis (P).

15. A wind turbine (10) including a tower (12) on which is mounted a nacelle (14) that supports a rotatable hub (16), wherein the rotatable hub is coupled to a transmission in accordance with any one of Claims 1 to 12.
